# EUROPEAN PATENT APPLICATION

(11) **EP 2 200 365 A1**
(43) Date of publication of application: **23.06.2010**
(21) Application number: 08305961.8
(22) Date of filing: 17.12.2008
(51) Int. Cl.: H04W 36/00

(54) **Interworking between Wimax and 3GPP networks**

(71) Applicant: Alcatel Lucent, 75008 Paris (FR)
(72) Inventor: Orlandi, Barbara, 91620, NOZAY (FR); El Mghazli, Yacine, 91620, NOZAY (FR)
(74) Representative: El Manouni, Josiane

(57) **Abstract**

One object of the present invention is a method for interworking between WiMAX and 3GPP networks, said method comprising the steps of, while a Mobile Station MS is connected to WiMAX network:
- MS and a WiMAX/3GPP interworking entity referred to as IWK-SGSN connected on the one hand to 3GPP PS CN via 3GPP Gn interface and on the other hand to a WiMAX ASN entity, exchanging data for interworking purposes referred to as interworking data, via WiMAX ASN,
- IWK-SGSN and WiMAX ASN entity exchanging interworking data through a tunnel setup between IWK-SGSN and WiMAX ASN for interworking purposes, referred to as interworking tunnel.

## Description

The present invention generally relates to mobile communication networks and systems.

Detailed descriptions of mobile communication networks and systems can be found in the literature, such as literature published by standardisation bodies.

One example is WiMAX, a description of which can be found in particular in IEEE 802.16e and WiMAX Forum standards.

In WiMAX, a Mobile Station MS has access, via an Access Service Network ASN, to IP services provided by a Connectivity Service Network CSN. ASN is defined as a set of network functions needed to provide radio access to a WiMAX subscriber. CSN is defined as a set of network functions enabling IP connectivity and WiMAX services to WiMAX subscribers. ASN includes entities such as Base Station BS and ASN Gateway ASN GW. CSN includes entities such as AM Server, DHCP Server and Home Agent HA. Different interoperability Reference Points are defined, such as in particular Reference Point R3 between ASN and CSN.

Another example is 3GPP ("3^{rd} Generation Partnership Project"), a description of which can be found in particular in 3GPP standards.

In 3GPP, a Mobile Station MS (or User Equipment UE) has access to IP services via an Access Network AN providing IP connectivity. The Access Network AN generally comprises a Radio Access Network RAN and a Packet Switched Core Network PS CN. The Packet Core Network includes entities such as SGSN (Serving GPRS Support Node), GGSN (Gateway GPRS Support Node), and HLR/HSS (Home Location Register/Home Subscriber Server). Different interfaces are defined, such as in particular Gn interface between GSNs (GPRS Support Nodes) and Gi interface between GGSN and external Packet Data Network PDN.

Generally, there is a need to improve interworking and/or mobility between different types of access networks, such as in particular WiMAX and 3GPP access networks. In particular, at handover from WiMAX to 3GPP network, there is a need to minimize the handoff break time by preparing the target 3GPP network to receive the MS after the handoff, in particular for a single-radio multi-mode terminal as it cannot be connected simultaneously to WiMAX and 3GPP (2G, 3G or LTE); in other words, there is a need to address single-radio interworking and mobility from WiMAX to 3GPP. In particular, there is a need to allow a MS to pre-register at the 3GPP network and pre-activate a PDP context, when still connected to WiMAX radio access network. There is also a need for a solution which is able to work with currently deployed PreRelease 8 3GPP networks.

The present invention in particular addresses part or all of such needs.

These and other objects of the present invention are achieved, in one aspect of the present invention, by a method for interworking between WiMAX and 3GPP networks, sold method comprising the steps of, while a Mobile Station MS is connected to WiMAX network:
- MS and a WiMAX/3GPP interworking entity referred to as IWK-SGSN connected on the one hand to 3GPP PS CN via 3GPP Gn interface and on the other hand to a WiMAX ASN entity, exchanging data for interworking purposes referred to as interworking data, via WiMAX ASN,
- IWK-SGSN and WiMAX ASN entify exchanging interworking data through a tunnel setup between IWK-SGSN and WiMAX ASN for interworking purposes, referred to as interworking tunnel.

These and other objects of the present invention are achieved, in another aspect of the present invention, by entities, such as in particular Mobile Station MS, WiMAX ASN entity such as in particular ASN-GW, and WiMAX/3GPP interworking entity such as IWK-SGSN, comprising means for performing such method.

These and other objects of the present invention will become more apparent from the following description taken in conjunction with the accompanying drawings:
- figure 1 illustrates an example of architecture in which the present invention can be used,
- figure 2 illustrates an example of problem solved by the present invention,
- figure 3 illustrates an example of a a method for handover from WiMAX to 3GPP network, according to an embodiment of the present invention, in the example of architecture illustrated in figure 1.

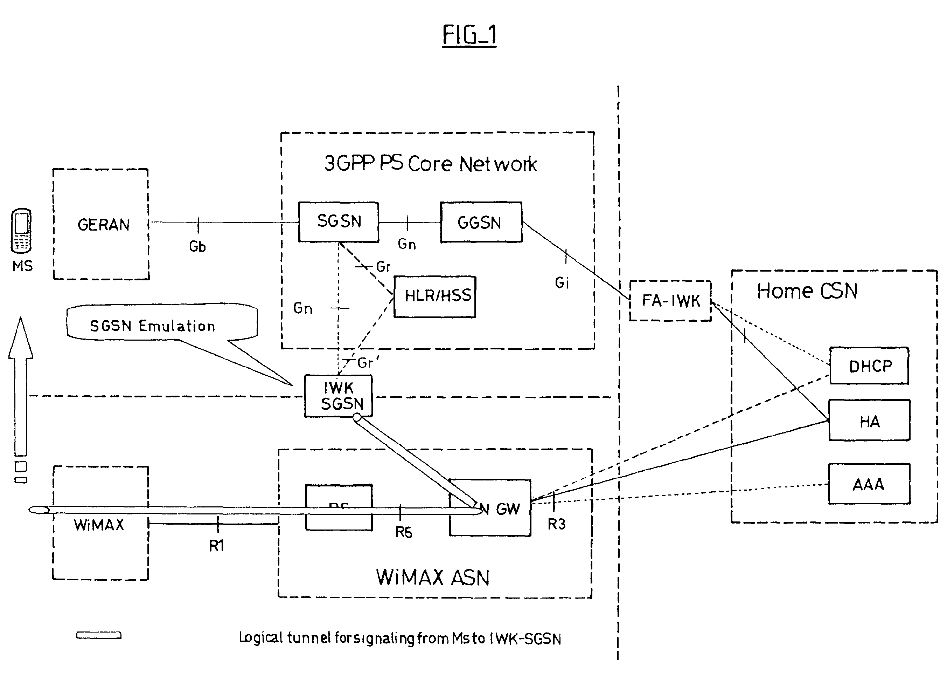

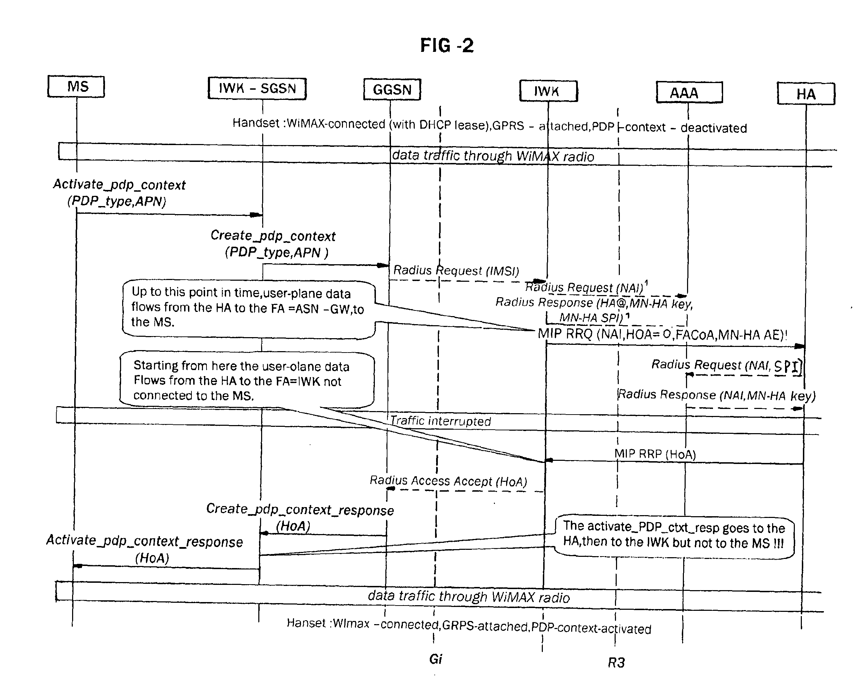

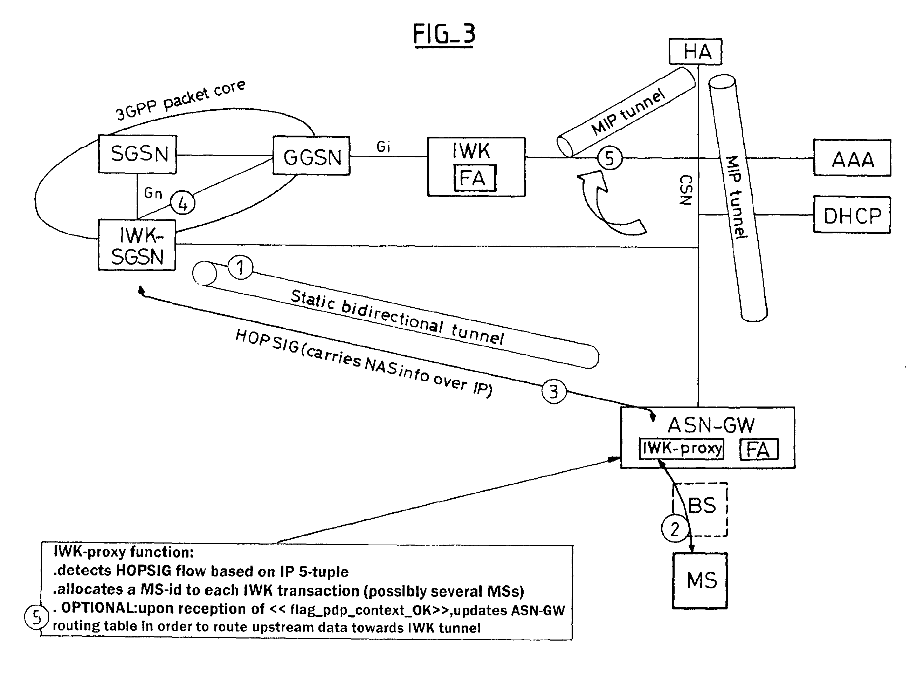

The system illustrated in figure 1 comprises:
- a duol-mode WiMAX /3GPP Mobile Station MS,
- a WiMAX network comprising ASN and Home CSN, ASN in turn composing entities such as BS and ASN-GW, and Home CSN in turn comprising entities such as AAA Server, Home Agent HA and DHCP Server,
- a 3GPP access network comprising RAN (such as GERAN/UTRAN) and PS Core Network, such as 2G/3G PS Core Network, in turn comprising entities such as SGSN, GGSN and HLR/HSS,
- a WiMAX/3GPP interworking entity noted FA-IWK, connected on the one hand to 3GPP PS CN via 3GPP Gi interface, and on the other hand to WiMAX CSN via WiMAX R3 interface. FA-IWK is associated with a specific APN such that, at 3GPP network entry or at handover from WiMAX to 3GPP, a Mobile Station MS sends an Activate PDP Context with this specific APN for access to FA-IWK. In other words, with this interworking entity, the WiMAX Home CSN is considered by GGSN as an ISP identified by a dedicated APN.
- a WiMAX/3GPP interworking entity noted IWK-SGSN, connected on the one hand to 3GPP PS CN via 3GPP Gn interface and on the other hand to a WiMAX ASN entity such as ASN GSW, and such that MS and IWK-SGSN exchange data for interworking purposes (referred to hereinafter as interworking data) via WiMAX ASN. For example, for handover from WiMAX to 3GPP (as illustrated by way of example in figures 2 and 3) interworking data include data exchanged for handover preparation.

In a system such as for example the one illustrated in figure 1, an example of problem solved by the present invention is illustrated in figure 2.

Figure 2 illustrates an example of handover from WiMAX to 3GPP network. The following steps are illustrated in figure 2:
- the MS triggers the HO (HandOver) and sends the necessary information to the IWK-SGSN function through the applicative tunnel via the HA (normal data path).
- the IWK-SGSN performs the necessary signaling (e.g. GPRS Tunneling Protocol GTP) in the 3GPP core network. This results in attaching the MS in the 3GPP HLR and activating (respectively creating) a PDP context at the SGSN (respectively GGSN) level.
- the PDP context activation procedure triggers the MIP update at the HA level. From now on, the data will be routed by the HA towards the GGSN via the FA-IWK function. This part cannot be modified as the FA-IWK function cannot know if the UE is dual-radio or single radio and hence needs to perform always the same procedure.
- the data packets are then sent to the IWK-SGSN function and then routed using the Home Address of the MS.
- packets are then routed towards the Home Agent. Therefore a problem is that at this stage the HA has been updated and the packets are directed again towards the Pre-Rel8 IWK function and the GGSN.
- Step 4) again.

In other words a problem is that, when integrated with a PMIP mobility execution, there is a design problem that creates an infinite loop of the data path. The present invention in particular recognizes such problem.

In an embodiment, the present invention proposes, for carrying the interworking related messages between MS and IWK-SGSN to replace the IP tunnel that goes transparently through the ASN-GW by a specific protocol identifier that would allow the ASN-GW to directly route the messages to/from the IWK-SGSN.

In other words, in an embodiment, the present invention proposes to replace use of current IP data path:
MS --[IP data plane]--> ASN-GW--[PMIP tunnel]--> HA --[IP]--> IWK-SGSN
which doesn't work in the reverse direction once the MIP update has been mode by:
   MS --[IWK SIG 1 protocol]--> ASN-GW --[IWK SIG 2 protocol]--> IWK-SGSN
   IWK-SGSN --[IWK SIG 2 protocol]--> ASN-GW --[IWK SIG 1 protocol]--> MS.

When the MS and ASN-GW implement such solution, an example of interworking between WiMAX and 3GPP networks can be as illustrated in figure 3. The following steps are provided.
- At start-up time, a bidirectional tunnel is setup between ASN-GW and IWK-SGSN for interworking purposes.
- The MS detects the HO trigger and sends the necessary information to the ASN-GW, destination address and port number may be used as criteria for the ASN-GWto detect those are interworking messages. In other words, in this example, the above-mentioned IWK SIG1 protocol is a protocol between MS and ASN-GW based on the use of a particular port number.
- The ASN-GW adds to the MS interworking messages an overhead allowing to identify the MS and sends this to the IWK-SGSN via the predefined tunnel from step 1. In other words, in this example, the above-mentioned IWK SIG2 protocol is a protocol between ASN-GW and IWK-SGSN based on the addition of an overhead crowing to identify the MS. In this example, HOP-SIG protocol in figure 3 illustrates the combination of IWK-SIG1 and IWK-SIG2 protocols, and IWK-proxy illustrates an entity within ASN-GW carrying out HOP SIG protocol.
- The IWK-SGSN function performs the 3GPP signaling (e.g. GTP) in the 3GPP core network. This results in attaching the MS in the 3GPP HLR and activating/creating a PDP context at the SGSN/GGSN level.
- The PDP context activation triggers the MIP update at the HA level. From then on, data is routed by the HA towards the GGSN through the FA-IWK function.
- On receiving the PDP Context Creation response, the IWK-SGSN adds to the Activate PDP Context Accept message to the UE the interworking overhead identifying the MS (same as the one received in messages from the ASN-GW in this example; other examples would of course be possible, such as IWK-SGSN and ASN-GW exchanging respective interworking overheads). In addition, in this example, IWK-SGSN may also set a flag to indicate to the ASN GW that the UL (Uplink) data plane traffic may now also be sent to the IWK-SGSN (it will follow the GTP tunnel etc...).

An example of procedure may be as follows for UL (Uplink) interworking Signalling (or control plane data):
- MS sends interworking messages to ASN-GW
- ASN-GW odds an interworking overhead (Mobile Reference or ld, a few spare fields for future protocol extension)
- ASN-GW sends this to the IWK-SGSN.

An example of procedure may be as follows for DL (Downlink) interworking Signalling:
- IWK-SGSK sends interworking messages to ASN-GW using same overhead, in addition a flag may be set to tell the ASN-GW to send the UL user-plane traffic to the IWK-SGSN rather than to the HA
- ASN-GW removes IWK overhead and sends this to the MS.

An example of procedure may be as follows for UL data plane (or user plane data):
- MS sends IP packets to ASN-GW
- ASN-GW sends them to HA (flag not set) or the IWK-SGSN (flag set by the IWK-SGSN when GTP tunnel ready on 3GPP side).

An example of procedure may be as follows for DL data plane:
- the packets arrive to the IWK-SGSN via the GTP tunnel
- the IWK-SGSN forwards them to the ASN-GW
- the ASN-GW forwards to the MS.

In one aspect of the present invention, in an embodiment, the present invention provides a method for interworking between WiMAX and 3GPP networks, said method comprising the steps of, while a Mobile Station MS is connected to WiMAX network:
- MS and a WiMAX/3GPP interworking entity refrred to as IWK-SGSN connected on the one hand to 3GPP PS CN via 3GPP Gn interface and on the other hand to a WiMAX ASN entity, exchanging data for interworking purposes referred to as interworking data, via WiMAX ASN,
- IWK-SGSN and WiMAX ASN entity exchanging interworking data through a tunnel setup between IWK-SGSN and WiMAX ASN entity for interworking purposes, referred to as interworking tunnel.

In an embodiment, said interworking data include downlink control plane data.

In an embodiment, said interworking data include downlink user plane data.

In an embodiment, said interworking data include uplink control plane data.

In an embodiment, said interworking data include uplink user plane data,

In an embodiment, said interworking data include data exchanged for handover preparation from WiMAX to 3GPP network.

In an embodiment, said interworking data include data exchanged for allowing MS to attach to 3GPP network.

In an embodiment, said interworking data include data exchanged for allowing MS to pre-activate a PDP context.

In an embodiment, said interworking data include an Activate PDP Context Response message sent by IWK-SGSN to MS via WiMAX ASN and containing a Home Address HoA assigned to MS by WIMAX CSN.

In another aspect of the present invention, in an embodiment, there is provided a method comprising a step of:
- on receiving interworking data to be sent to MS via WiMAX ASN entity, IWK-SGSN adding to said data an overhead referred to as interworking overhead allowing to identify the MS, before sending said data to WiMAX ASN entity through said interworking tunnel.

In an embodiment, said overhead corresponds to the same overhead as added by WiMAX ASN entity before sending interworking data to IWK-SGSN through said interworking tunnel.

In another aspect of the present invention, in an embodiment, there is provided a method comprising the steps of:
- MS adding to interworking data to be sent to IWK-SGSN via WiMAX ASN entity a destination address corresponding to WiMAX ASN entity address, and a port number enabling ASN to detect that said data correspond to interworking data,
- ASN entity detecting data corresponding to interworking data, based on said port number.

In another aspect of the present invention, in an embodiment, there is provided a method comprising a step of:
- IWK-SGSN adding to downlink control plane interworking data a flag indicating to WiMAX ASN entity that uplink user plane interworking data may now be sent to IWK-SGSN through said interworking tunnel.

In addition to a method for interworking between WiMAX and 3GPP networks (examples of which have been decribed above), the present invention also has for its object different entities, such as in particular Mobile Station MS, WiMAX ASN entity such as in particular ASN-GW, and WiMAX/3GPP interworking entity IWK-SGSN, comprising means for performing such methods.

The detailed implementation of the above-metioned means does not raise any special problem for a person skilled in the art, and therefore such means do not need to be more fully disclosed than has been made above, by their function, for a person skilled in the art.

## Claims

1. A method for interworking between WiMAX and 3GPP networks, said method comprising the steps of, while a Mobile Station MS is connected to WiMAX network:
- MS and a WiMAX/3GPP interworking entity referred to as IWK-SGSN connected on the one hand to 3GPP PS CN via 3GPP Gn interface and on the other hand to a WiMAX ASN entity, exchanging data for interworking purposes referred to as interworking data, via WiMAX ASN,
- IWK-SGSN and WiMAX ASN entity exchanging interworking data through a tunnel setup between IWK-SGSN and WiMAX ASN entity for interworking purposes, referred to as interworking tunnel.

2. A method according to claim 1, wherein said interworking data include downlink control plane data.

3. A method according to claim 1, wherein said interworking data include downlink user plane data.

4. A method according to claim 1, wherein said interworking data include uplink control plane data.

5. A method according to claim 1, wherein said interworking data include uplink user plane data.

6. A method according to any of claims 1 to 5, wherein said interworking data include data exchanged for handover preparation from WiMAX, to 3GPP network.

7. A method according to claim 6, wherein said interworking data include data exchanged for allowing MS to attach to 3GPP network.

8. A method according to claim 6, wherein said interworking data include data exchanged for crowing MS to pre-activate a PDP context.

9. A method according to claim 8, wherein said interworking data include an Activate PDP Context Response message sent by IWK-SGSN to MS via WiMAX ASN and containing a Home Address HoA assigned to MS by WiMAX CSN.

10. A method according to any of claims 1 to 9, comprising a step of:
- on receiving interworking data to be sent to MS via WiMAX ASN entity, IWK-SGSN adding to said data an overhead referred to as interworking overhead allowing to identify the MS, before sending said data to WiMAX ASN entity through said interworking tunnel.

11. A method according to claim 10, wherein said overhead corresponds to the same overhead as added by WiMAX ASN entity before sending interworking data to IWK-SGSN through said interworking tunnel.

12. A method according to any of claims 1 to 11, comprising the steps of:
- MS adding to interworking data to be sent to IWK-SGSN via WiMAX ASN entity a destination address corresponding to WiMAX ASN entity address, and a port number enabling ASN to detect that said data correspond to interworking data,
- ASN entity detecting data corresponding to interworking data, based on said port number.

13. A method according to any of claims 1 to 12, comprising a step of:
- IWK-SGSN adding to downlink control plane interworking data a flag indicating to WiMAX ASN entity that uplink user plane interworking data may now be sent to IWK-SG5M through said interworking tunnel.

14. A Mobile Station MS, comprising means for performing a method according to any of claims 1 to 13.

15. A WiMAX ASN entity, in particular ASN-GW, comprising means for performing a method according to any of claims 1 to 13.

16. A WiMAX/3GPP interworking entity IWK-SGSN, comprising means for performing a method according to any of claims 1 to 13.
